# EUROPÄISCHE PATENTSCHRIFT

(11) **EP 1 220 768 B1**
(45) Veröffentlichungstag und Bekanntmachung des Hinweises auf die Patenterteilung: **10.03.2004**
(21) Anmeldenummer: 00983006.8
(22) Anmeldetag: 13.10.2000
(51) Int. Cl.: B60R 21/01

(54) **ZÜNDEINRICHTUNG FÜR EINE PYROTECHNISCHE INSASSENSCHUTZEINRICHTUNG**
IGNITION DEVICE FOR A PYROTECHNIC OCCUPANT PROTECTION DEVICE
DISPOSITIF D'ALLUMAGE POUR UN DISPOSITIF PYROTECHNIQUE DE PROTECTION DES OCCUPANTS

(30) Priorität: 15.10.1999 DE 19949842
(43) Veröffentlichungstag der Anmeldung: 10.07.2002
(73) Patentinhaber: SIEMENS AKTIENGESELLSCHAFT, 80333 München (DE); BREED AUTOMOTIVE TECHNOLOGY, INC., Lakeland, FL 33807-3050 (US)
(72) Erfinder: HOVET, Kevin, Maple Plain, MN 55359 (US); POPP, Peter, 93049 Regensburg (DE); ZELGER, Christian, 93049 Regensburg (DE)
(74) Vertreter: Berg, Peter, Dipl.-Ing.
(86) Internationale Anmeldenummer: PCT/DE2000/003622
(87) Internationale Veröffentlichungsnummer: WO 2001/026935

(56) Entgegenhaltungen:
- EP-A- 0 805 074
- EP-A- 0 836 967
- US-A- 5 964 816

## Beschreibung

Die Erfindung betrifft eine Zündeinrichtung für eine pyrotechnische Insassenschutzeinrichtung, insbesondere in Kraftfahrzeugen, gemäß dem Oberbegriff des Hauptanspruchs.

Eine solche Zündeinrichtung ist aus der EP 0 805 074 A1 bekannt.

Solche bekannten Zündeinrichtungen für pyrotechnische Insassenschutzeinrichtungen, beispielsweise Zündpillen für Gasgeneratoren von Airbags oder Gurtstraffern, werden zur Qualitätssicherung einem sog. "Brouston"-Test unterzogen. Dabei wird aus einem Los von Zündpillen eine Anzahl gezogen. An eine erste Zündpille wird dann eine erste Spannung angelegt. Zündet die Zündpille bei dieser Spannung noch nicht, wird die Spannung erhöht, bis eine Zündung erfolgt. Nach der Zündung der Zündpille wird bei einer zweiten Zündpille die Spannung, bei der die erste Zündpille gezündet hat, wieder etwas erniedrigt. Zündet die zweite Zündpille nicht, so wird die Spannung wiederum geringfügig erhöht, bis die Zündpille zündet, und so weiter. Im Ergebnis erhält man eine Zündverteilung über Zündspannungen. Der Vorteil des Brouston-Tests ist, daß mit relativ wenigen ausgelösten und gezündeten Zündkapseln eine relativ sichere statistische Aussage getroffen werden kann. Grund für die Verläßlichkeit dieser Aussage ist, daß die Spannung stets um die Zündspannung herum pendelt.

Herkömmliche Zündkapseln weisen zwei Anschlüsse bzw.
Anschluß-Pins auf, zwischen denen eine Zündbrücke, beispielsweise ein Schmelzdraht, liegt. Die Zündspannung wird an die Anschlüsse angelegt.

Bei modernen Zündeinrichtungen, die über einen Zündbus angesteuert werden, ist zwischen den kabelbaumseitigen Anschluß bzw. die kabelbaumseitigen Anschluß-Pins und die Zündpille eine Elektronikeinheit geschaltet, die an einem Spannungsausgang aus einer am Zündbus liegenden Vesorgungsspannung eine wohldefinierte und stabilisierte Zündspannung erzeugt und eine Energiezufuhr zur Zündpille nur dann zuläßt, wenn ein codiertes Zündsignal am Anschluß erkannt wird. Damit wird eine hohe Betriebssicherheit erreicht. Die zwischengeschaltete Elektronikeinheit macht jedoch den Brouston-Test unmöglich. Zwischen der Elektronikeinheit und der Zündbrücke sind bei solchen modernen Zündpillen bzw. Zündeinrichtungen keine Anschlußstellen zugänglich.

Der Erfindung liegt die Aufgabe zugrunde, eine gattungsgemäße Zündeinrichtung derart weiterzuentwickeln, daß bezüglich der Prüfbarkeit weitgehende Flexibilität besteht.

Diese Aufgabe wird mit den Merkmalen des Hauptanspruchs gelöst. Mit Hilfe der erfindungsgemäß vorgesehenen Schalteinrichtung ist es möglich, die Elektronikeinheit zu umgehen und die Zündeinrichtung in herkömmlicher Weise unmittelbar durch Beaufschlagung mit einer entsprechenden Versorgungs- bzw. Prüfspannung zu prüfen.

Die Unteransprüche sind auf vorteilhafte Weiterbildungen der erfindungsgemäßen Zündeinrichtung gerichtet.

Die Erfindung wird im Folgenden anhand schematischer Zeichnungen beispielsweise und mit weiteren Einzelheiten erläutert.

Es stellen dar:
- Fig. 1: ein Blockschaltbild der erfindungsgemäßen Zündeinrichtung und
- Fig. 2: ein Blockschaltbild einer Prüfschalteinrichtung.

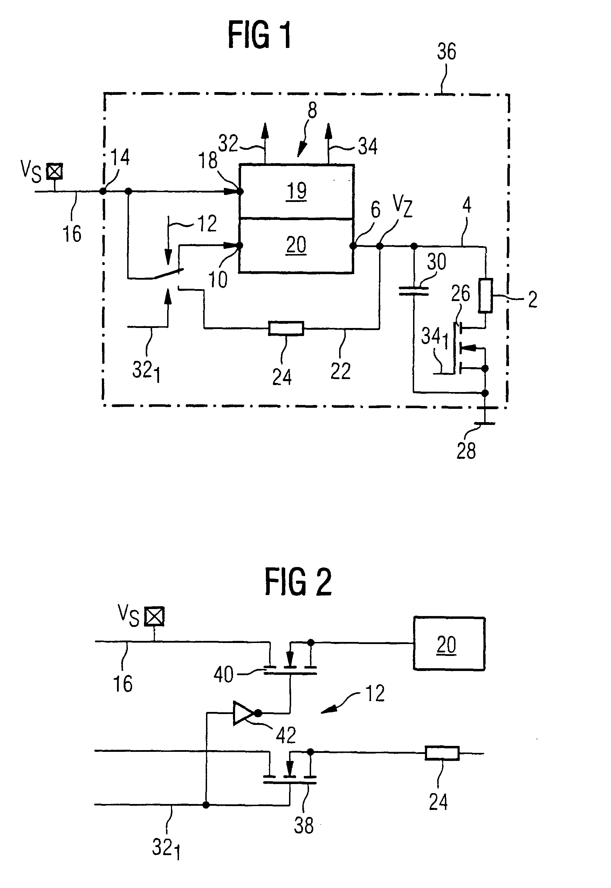

Gemäß Fig. 1 ist eine Klemme einer Zündpille 2 über eine Leitung 4 mit einem Spannungsausgang 6 einer Elektronikeinheit 8 verbunden. Ein Spannungseingang 10 der Elektronikeinheit 8 ist über eine Prüfschalteinrichtung 12 mit einem Anschluß 14 verbunden, an den eine externe Versorgungsleitung 16, beispielsweise ein Zündbus eines Fahrzeug-Elektriksystems angeschlossen ist. Der Anschluß 14 ist weiter mit einem Steuereingang 18 der Elektronikeinheit 8 verbunden, die einen Steuerteil 19 mit einem Spannungsteil 20 aufweist.

Parallel zur Elektronikeinheit 8 führt von der Prüfschalteinrichtung 12 zu dem Spannungsausgang 6 eine Bypass-Leitung 22 mit einem Ladewiderstand 24.

Die Zündpille 2 ist über einen Zündschalter 26 mit einem weiteren Anschluß 28 der Zündeinrichtung verbunden, der beispielsweise auf Masse liegen kann und an eine entsprechende Ader der Versorgungsleitung 16 angeschlossen ist.

Parallel zur Zündpille 2 und dem Zündschalter 26 liegt ein Ladekondensator 30.

Die Elektronikeinheit 8 weist zwei Steuerausgänge 32 und 34 auf, die mit entsprechenden Steuereingängen 32₁ und 34₁ der Prüfschalteinrichtung 12 bzw. des Zündschalters 26 verbunden sind.

Gestrichelt eingezeichnet ist ein Gehäuse 36, innerhalb dessen die gesamte Zündeinrichtung aufgenommen ist, wobei nur die Anschlüsse 16 und 28 von außen zugänglich sind. Es versteht sich, daß der Schaltungsintegrationsgrad unterschiedlich sein kann, beispielsweise die Schalter 12 und 26 sowie die Bypaß-Leitung 22 mit in die Elektronikeinheit 8 integriert sein können.

Die einzelnen Bauteile bzw. Bauelemente sind in ihrem Aufbau und in ihrer Funktion an sich bekannt, so daß im Folgenden nur deren Zusammenwirkung erläutert wird:

Es sei angenommen, an der Versorgungsleitung 16 liege eine Spannung, beispielsweise eine Wechselspannung mit konstanter Frequenz. Die Prüfschalteinrichtung 12 befindet sich in der dargestellten Stellung, in der der Anschluß 14 mit dem Spannungsteil 20 verbunden ist. Im Spannungsteil 20 wird aus der Versorgungsspannung V_{S} der Versorgungsleitung 16 eine vorbestimmte, konstante Zündspannung V_{Z} erzeugt, auf die der Ladekondensator 30 aufgeladen wird. Der Zündschalter 26 befindet sich in gesperrtem Zustand.

Wenn nun über die Versorgungsleitung 16 ein vorbestimmt codiertes Zündsignal zugeführt wird, wird dieses im Steuerteil 19 der Elektronikeinheit 8 erkannt und der Steuerteil 19 erzeugt an dem Steuerausgang 34 einen Zündimpuls, der den Zündschalter 26 auf Durchlaß schaltet. Der Ladekondensator 30 entlädt sich durch die Zündpille 2 und den Zündschalter 26 hindurch, wodurch die Zündpille 2 zündet.

Wenn an der Versorgungsleitung 16 ein vorbestimmtes, codiertes Prüfsignal liegt, wird dies vom Steuerteil 19 der Elektronikeinheit 8 erkannt und am Steuerausgang 32 ein Prüfimpuls erzeugt, der dem Steuereingang 32₁ der Prüfschalteinrichtung 12 zugeführt wird. Die Prüfschalteinrichtung 12 schaltet daraufhin um, so daß der Spannungseingang 10 vom Anschluß 14 getrennt ist und die Versorgungsleitung 16 mit der Bypass-Leitung 22 verbunden ist. Auf diese Weise wird die an der Versorgungsleitung 16 liegende Versorgungsspannung V_{S} unmittelbar dem Ladekondensator 30 zugeführt, so daß das Spannungsteil 20 unwirksam ist und die am Spannungsausgang 6 liegende Spannung V_{Z} gleich der Versorgungsspannung V_{S} ist. Der Ladewiderstand 24 sorgt dafür, daß der Ladestrom begrenzt ist, so daß die Zündpille 2 auch bei einem Defekt des Zündschalters 26 nicht zünden kann.

Wenn der Ladekondensator 30 jeweils auf die Versorgungsspannung V_{S} aufgeladen ist, kann der Zündschalter 26, wie oben beschrieben, über ein Zündsignal der Versorgungsleitung 16 und einen daraufhin am Steuerausgang 34 erscheinenden Zündimpuls auf Durchlaß geschaltet werden, so daß, wie bei den eingangs geschilderten Brouson-Test geprüft werden kann, ob die Zündpille 2 bei der jeweiligen Versorgungsspannung zündet.

Die Prüfschalteinrichtung 12 kann durch jedwelche geeigneten Bauelemente bzw. Schaltelemente gebildet sein. Fig. 2 zeigt ein Beispiel:

Die Versorgungsleitung 14 ist über einen ersten Schalter, beispielsweise einen MOSFET 38 mit dem Ladewiderstand 24 und über einen zweiten, beispielsweise ebenfalls als MOSFET ausgeführten Schalter 40 mit dem Spannungsteil 20 verbunden. Der Steuereingang 32₁ ist zur Ansteuerung des Schalters 38 unmittelbar mit diesem und zur Ansteuerung des Schalters 40 mit diesem über einen Inverter 42 verbunden. Je nach Polarität der am Steuereingang 32₁ liegenden Spannung verbindet der Schalter 38 die Versorgungsleitung 16 mit dem Ladewiderstand 24 und sperrt der Schalter 40 oder verbindet der Schalter 40 die Versorgungsleitung 16 mit dem Spannungsteil 20 und sperrt der Schalter 38.

Es versteht sich, daß die beschriebene Zündeinrichtung in vielfältiger Weise abgeändert werden kann. Beispielsweise kann zusätzlich zum Zündschalter 26 ein Saving-Schalter vorgesehen sein, der im Sinne einer logischen UND-Schaltung zusätzlich zum Zündschalter 26 aktiviert sein muß, damit sich der Ladekondensator 30 durch die Zündpille 2 hindurch entladen kann. Die Versorgungsleitung 14 kann unterschiedlich aufgebaut sein, beispielsweise eine Ader enthalten, die die Versorgungsspannung führt, und eine andere Ader enthalten, die die Steuersignale führt. In diesem Fall ist der Steuereingang 18 mit der Steuerader verbunden und der Eingang der Prüfschalteinrichtung 12 mit der Spannungsader.

## Patentansprüche

1. Zündeinrichtung (36) für eine pyrotechnische Insassenschutzeinrichtung, insbesondere in Kraftfahrzeugen, enthaltend
eine Zündpille (2),
einen Anschluß (14) für eine externe Versorgungsleitung (16), eine Elektronikeinheit (8) mit einem Spannungseingang (10) und einem Steuereingang (18), die mit dem Anschluß (14) verbunden sind, einem Spannungsausgang (6) und einem Zündausgang (34), und
einen Zündschalter (26), dessen Steuereingang (34₁) mit dem Zündausgang (34) verbunden ist,
wobei die Zündpille (2) mit dem Spannungsausgang (6) und dem Zündschalter (26) verbunden ist, und wobei die Elektronikeinheit (8) an ihrem Spannungsausgang (6) bei Beaufschlagung ihres Spannungseingangs (10) mit einer Versorgungsspannung eine vorbestimmte Zündspannung erzeugt und bei Beaufschlagen ihres Steuereingangs (18) mit einem Zündsignal an ihrem Zündausgang (34) einen Zündimpuls erzeugt, der den Zündschalter (26) aktiviert, so daß die Zündpille (2) zündet,
**dadurch gekennzeichnet, dass**
zwischen dem Anschluß (14) und dem Spannungseingang (10) eine Prüfschalteinrichtung (12) angeordnet ist, deren Steuereingang (32₁) mit einem Prüfausgang (32) der Elektronikeinheit (8) verbunden ist, und
dass zwischen der Prüfschalteinrichtung (12) und dem Spannungsausgang (6) eine Bypaß-Leitung (22) vorgesehen ist,
wobei die Prüfschalteinrichtung (12) bei Beaufschlagen des Steuereingangs (18) der Elektronikeinheit (8) mit einem Prüfsignal die Verbindung zwischen dem Anschluß (14) und dem Spannungseingang (10) trennt und den Anschluß (14) mit der Bypaß-Leitung (22) verbindet.

2. Zündeinrichtung nach Anspruch 1, **dadurch gekennzeichnet,**
**daß** in der Bypaß-Leitung (22) ein Ladewiderstand (24) angeordnet ist, der den durch die Bypaß-Leitung fließenden Strom auf einen Wert begrenzt, bei dem die Zündvorrichtung (2) nicht zündet.

3. Zündeinrichtung nach Anspruch 1 oder 2, **dadurch gekennzeichnet,**
**daß** die Prüfschalteinrichtung (12) einen MOSFET enthält.

## Claims

1. Firing device (36) for a pyrotechnic vehicle-occupant protection device, in particular in motor vehicles, containing
a firing cap (2),
a terminal (14) for an external supply line (16), an electronic unit (8) with a voltage input (10) and a control input (18) which are connected to the terminal (14), a voltage output (6) and a firing output (34), and
a firing switch (26), the control input (34₁) of which is connected to the firing output (34),
the firing cap (2) being connected to the voltage output (6) and to the firing switch (26), and the electronic unit (8) generating a predetermined firing voltage at its voltage output (6) when a supply voltage is applied to its voltage input (10), and generating, when a firing signal is applied to its control input (18), a firing pulse at its firing output (34), which firing pulse actuates the firing switch (26) with the result that the firing cap (2) fires,
**characterized**
**in that** a test switching device (12) is arranged between the terminal (14) and the voltage input (10), the control input (32₁) of which test switching device (12) is connected to a test output (32) of the electronic unit (8), and in that a bypass line (22) is provided between the test switching device (12) and the voltage output (6), the test switching device (12) disconnecting the connection between the terminal (14) and the voltage input (10) and connecting the terminal (14) to the bypass line (22) when a test signal is applied to the control input (18) of the electronic unit (8).

2. Firing device according to Claim 1, **characterized in that** a charging resistor (24) which limits the current flowing through the bypass line to a value at which the firing component (2) does not fire is arranged in the bypass line (22).

3. Firing device according to Claim 1 or 2, **characterized in that** the test switching device (12) contains a MOSFET.

## Revendications

1. Dispositif d'allumage (36) pour un dispositif pyrotechnique de protection du passager d'un siège, en particulier dans des véhicules automobiles, comportant
- une amorce d'allumage (2),
- un raccordement (14) de conducteur d'alimentation externe (16),
- une unité électronique (8), comportant une entrée de tension (10) et une entrée de commande (18), qui sont reliées au raccordement (14), une sortie de tension (6) et une sortie d'allumage (34), et
- un commutateur d'allumage (26), dont l'entrée de commande (34₁) est reliée à la sortie d'allumage (34),
- l'amorce d'allumage (2) étant reliée à la sortie de tension (6) et au commutateur d'allumage (26), et l'unité électronique (8) produisant à sa sortie de tension (6) une tension d'allumage prédéfinie, si une tension d'alimentation est appliquée à son entrée de tension, et produisant sur sa sortie d'allumage, si un signal d'allumage est appliqué à son entrée de commande (18), une impulsion d'allumage qui active le commutateur d'allumage (26), de sorte que l'amorce d'allumage produit la mise à feu,
**caractérisé**
- **en ce qu'**entre le raccordement (14) et l'entrée de tension (10), est disposé un dispositif de circuit de contrôle (12), dont l'entrée de commande (32₁) est reliée à une sortie de contrôle (32) de l'unité électronique (8), et
- **en ce qu'**entre le dispositif de circuit de contrôle (12) et la sortie de tension (6), est prévu un conducteur by-pass (22),
- le dispositif de circuit de contrôle (12), si un signal de contrôle est appliqué à la sortie de commande (18) de l'unité électronique (8) par un signal de contrôle, coupant la liaison entre le raccordement (14) et l'entrée de tension (10), et reliant le raccordement (14) au conducteur by-pass (22).

2. Dispositif d'allumage suivant la revendication 1, **caractérisé en ce que**, dans le conducteur by-pass (22), est disposée une résistance de charge (24), qui limite le courant s'écoulant par le conducteur by-pass (22) à une valeur pour laquelle le dispositif d'allumage (2) ne produit pas l'allumage.

3. Dispositif d'allumage suivant la revendication 1 ou 2, **caractérisé en ce que** le dispositif de contrôle de commutation (12) contient un MOSFET.
